# EUROPEAN PATENT APPLICATION

(11) **EP 4 068 448 A1**
(43) Date of publication of application: **05.10.2022**
(21) Application number: 22164087.3
(22) Date of filing: 24.03.2022
(51) Int. Cl.: H01M 10/052, H01M 50/105, H01M 50/198, H01M 50/211, H01M 50/555

(54) **POWER STORAGE CELL, POWER STORAGE DEVICE, AND METHOD FOR MANUFACTURING POWER STORAGE DEVICE**

(30) Priority: 31.03.2021 JP 2021060098
(71) Applicant: TOYOTA JIDOSHA KABUSHIKI KAISHA, Toyota-shi, Aichi-ken, 471-8571 (JP)
(72) Inventor: MATSUMOTO, Mizuho, Toyota-shi, 471-8571 (JP); KATO, Masashi, Toyota-shi, 471-8571 (JP)
(74) Representative: D Young & Co LLP

(57) **Abstract**

A power storage cell comprises an electrode assembly (35) that is composed of a first electrode sheet (50), a separator and a second electrode sheet (52) stacked in layers, a collector plate (37) that is disposed adjacent to the electrode assembly (35) and has the first electrode sheet (50) connected thereto, and a laminate film (36) that seals the electrode assembly (35) and the collector plate (37) inside, wherein a portion of the laminate film (36) that is located on a major surface of the collector plate (37) has at least one exposure hole (92A, 95A) that exposes a portion of the collector plate (37).

## Description

This nonprovisional application is based on Japanese Patent Application No. 2021-060098 filed on March 31, 2021 with the Japan Patent Office, the entire contents of which are hereby incorporated by reference.

### BACKGROUND

### Field

The present disclosure relates to a power storage cell, a power storage device, and a method for manufacturing the power storage device.

### Description of the Background Art

A conventionally known power storage cell comprises an electrode assembly, a collector plate connected to the electrode assembly, and a laminate film sealing the electrode assembly.

For example, Japanese Patent Application Laying-Open No. 2013-229266 discloses a power storage cell comprising a laminate film formed in a thin rectangular plate. A collector plate is formed so as to project outward from a short side of the laminate film.

### SUMMARY

For the above power storage cell, the laminate film includes an upper film covering the electrode assembly from above and a lower film covering the electrode assembly from below.

The upper and lower films have their peripheral edge portions adhered together to form the laminate film sealing the electrode assembly inside.

When the upper and lower films are adhered together to form the laminate film, the upper film is adhered to an upper surface of the collector plate and the lower film is adhered to a lower surface of the collector plate. The upper and lower films are then adhered on the side of a side surface of the collector plate.

Therefore, a gap may be formed between the side surface of the collector plate and the upper and lower films on the side of the side surface of the collector plate.

Such a gap causes various problems such as external leakage of electrolyte provided inside the laminate film, foreign matters entering the laminate film, and the like.

The present disclosure has been made in view of such a problem as above, and an object thereof is to provide a power storage cell comprising a laminate film that suppresses formation of a gap, a power storage device comprising the power storage cell, and a method for manufacturing the power storage device.

According to an embodiment of the present disclosure, a power storage cell comprises an electrode assembly that is composed of a first electrode sheet, a separator and a second electrode sheet stacked in layers, a collector plate that is disposed adjacent to the electrode assembly and has the first electrode sheet connected thereto, and a laminate film that seals the electrode assembly and the collector plate inside, wherein a portion of the laminate film that is located on a major surface of the collector plate has at least one exposure hole that exposes a portion of the collector plate.

The major surface of the collector plate is provided with an adhesive material that is disposed along an opening of the exposure hole and adheres the collector plate and the laminate film together. The laminate film includes a first film and a second film and the first film is disposed so as to cover the electrode assembly and the collector plate on one side, and the first and second films have their respective peripheral portions entirely fused together. A power storage device comprises a power storage module including such power storage cells stacked in layers.

A method for manufacturing a power storage device comprises preparing a plurality of power storage cells and stacking the plurality of power storage cells in a stacking direction, wherein the plurality of power storage cells each include an electrode assembly, a collector plate connected to the electrode assembly, and a laminate film that seals the electrode assembly and the collector plate, the laminate film has a first exposure hole and a second exposure hole that expose a portion of a major surface of the collector plate, a portion of the collector plate exposed through the first exposure hole has a first through hole and a portion of the collector plate exposed through the second exposure hole has a second through hole, and in the step of stacking the plurality of power storage cells, power storage cells adjacent in the stacking direction are positioned using the first and second through holes formed through the power storage cells adjacent in the stacking direction.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically showing a power storage device 1 and the like according to an embodiment.
Fig. 2 is a cross-sectional view taken along a line II-II indicated in Fig. 1.
Fig. 3 is a perspective view schematically showing a power storage module 20, bus bars 21, 22, and the like.
Fig. 4 is a perspective view of a power storage cell 30.
Fig. 5 is an exploded perspective view of power storage cell 30.
Fig. 6 is a perspective view schematically showing a positive electrode sheet 50.
Fig. 7 is a perspective view schematically showing a negative electrode sheet 52.
Fig. 8 is a plan view of a major surface 46 of a positive electrode collector plate 37 and a configuration surrounding the major surface.
Fig. 9 is a plan view of a major surface 47 of positive electrode collector plate 37.
Fig. 10 is a plan view of a major surface 48 of a negative electrode collector plate 38.
Fig. 11 is a plan view of a major surface 49 of negative electrode collector plate 38.
Fig. 12 is a cross-sectional view of power storage cell 30.
Fig. 13 is a plan view of an exposure hole 92A and a hole 71A.
Fig. 14 is a flowchart of a process for manufacturing power storage device 1.
Fig. 15 is a diagram schematically showing a connecting piece welding step.
Fig. 16 is a diagram schematically showing a connecting piece welding step.
Fig. 17 is a schematic diagram schematically showing a laminate film assembling step (Step 30).
Fig. 18 is a cross-sectional view schematically showing a terminal fusing step (step 40).
Fig. 19 is a cross-sectional view schematically showing a terminal fusing step (step 40).
Fig. 20 is a schematic view of a stacking step.

### DESCRIPTION OF THE PREFERRED EMBODIMENTS

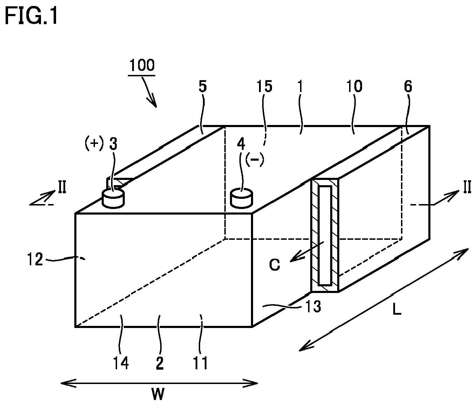

A power storage cell and a power storage device according to an embodiment will now be described with reference to Figs. 1 to 20. Of the configurations shown in Figs. 1 to 20, any configuration that is identical or substantially identical is identically denoted and will not be described redundantly.

Fig. 1 is a perspective view schematically showing a power storage device 1 and the like according to an embodiment. A battery pack 100 comprises power storage device 1 and cooling devices 5 and 6. Power storage device 1 includes an accommodation case 2, a positive electrode's external terminal 3, and a negative electrode's external terminal 4.

Accommodation case 2 is formed generally in a rectangular parallelepiped. Accommodation case 2 includes a top plate 10, a bottom plate 11, lateral walls 12 and 13, and end walls 14 and 15. Lateral walls 12 and 13 are aligned in a widthwise direction W and formed to extend in a longitudinal direction L. End walls 14 and 15 are aligned in longitudinal direction L and formed to extend in widthwise direction W.

The positive electrode's external terminal 3 and the negative electrode's external terminal 4 are provided on an upper surface of top plate 10. The positive electrode's external terminal 3 and the negative electrode's external terminal 4 are spaced in widthwise direction W.

Cooling device 5 is disposed on lateral wall 12, and cooling device 6 is disposed on lateral wall 13. Coolant C flows through cooling devices 5 and 6. In Fig. 1, cooling devices 5 and 6 are partially shown in cross section and thus omitted.

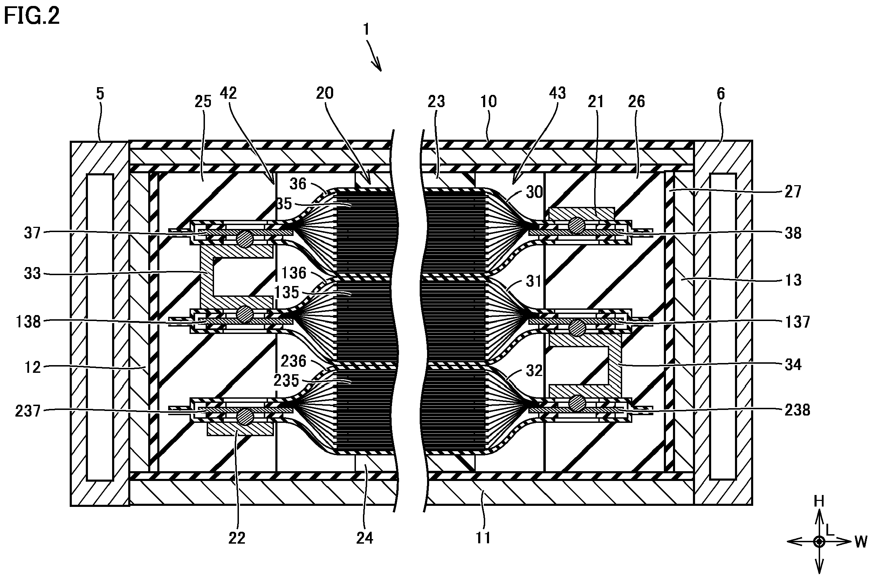

Fig. 2 is a cross-sectional view taken along a line II-II indicated in Fig. 1.
Power storage device 1 includes a power storage module 20, bus bars 21 and 22 connected to power storage module 20, expansion absorbing materials 23 and 24, potting materials 25 and 26, and an insulating film 27.

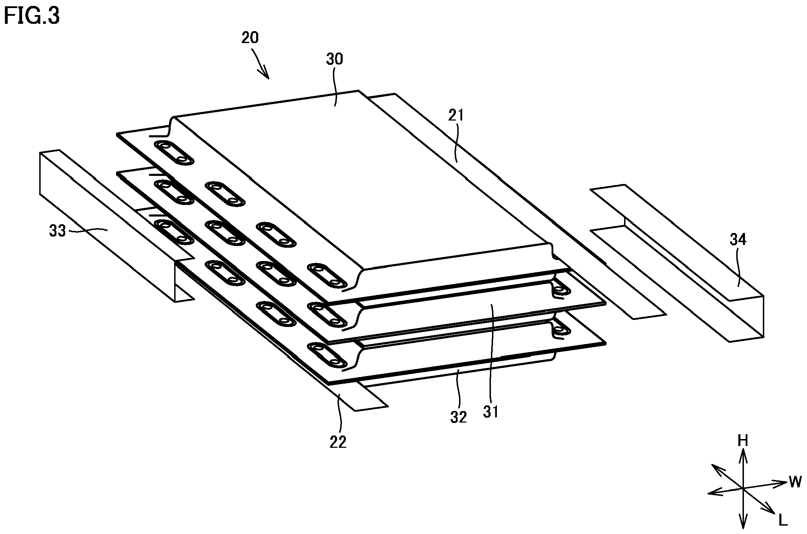

Fig. 3 is a perspective view schematically showing power storage module 20, bus bars 21, 22, and the like. Power storage module 20 includes a plurality of power storage cells 30, 31 and 32 stacked in a stacking direction H, and a plurality of connecting members 33 and 34.

Power storage cells 31 and 32 have substantially the same configuration as power storage cell 30, and accordingly, power storage cell 30 will be described.

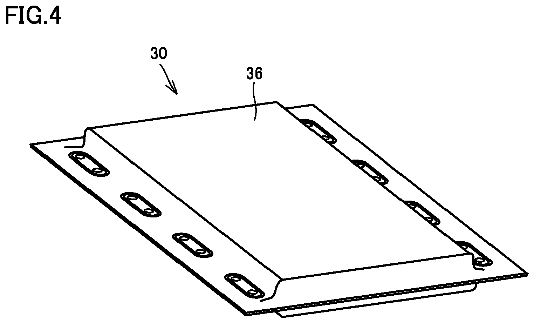

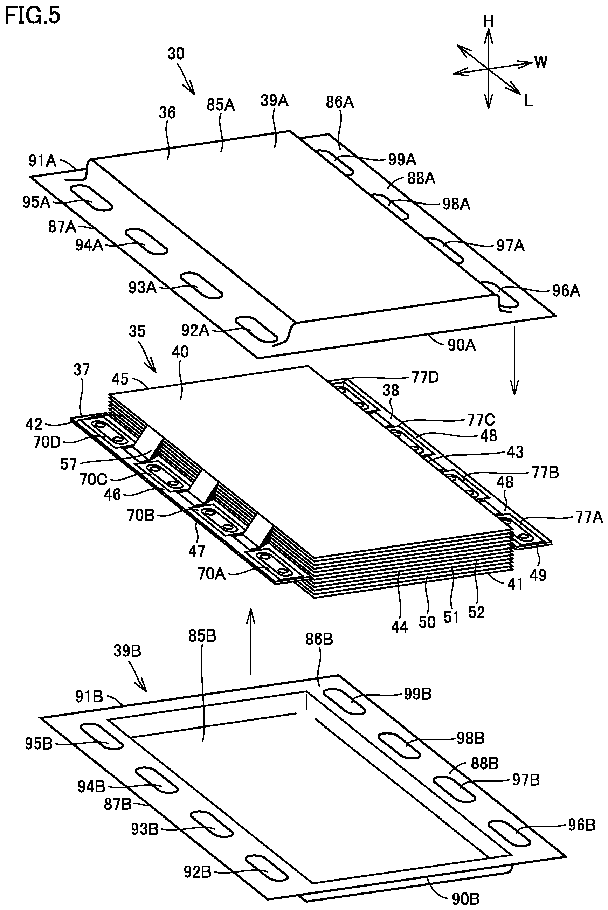

Fig. 4 is a perspective view of power storage cell 30, and Fig. 5 is an exploded perspective view of power storage cell 30. Power storage cell 30 includes an electrode assembly 35, a laminate film 36, a positive electrode collector plate 37, and a negative electrode collector plate 38.

Laminate film 36 has a structure composed of a resin film, an aluminum foil, and a resin film stacked in layers. Laminate film 36 seals electrode assembly 35, positive electrode collector plate 37, negative electrode collector plate 38, and an electrolyte (not shown) therein.

Electrode assembly 35 is formed generally in a rectangular parallelepiped. Electrode assembly 35 includes an upper surface 40, a lower surface 41, lateral surfaces 42 and 43, and end surfaces 44 and 45. Lateral surfaces 42 and 43 are aligned in widthwise direction W and formed to extend in longitudinal direction L. End surfaces 44 and 45 are aligned in longitudinal direction L and formed to extend in widthwise direction W. A length of lateral surfaces 42, 43 in longitudinal direction L is longer than a length of end surfaces 44, 45 in widthwise direction W.

Positive electrode collector plate 37 is provided on the side of lateral surface 42 of electrode assembly 35, and negative electrode collector plate 38 is provided on the side of lateral surface 43 of electrode assembly 35.

Electrode assembly 35 includes a plurality of positive electrode sheets 50, a plurality of separators 51, and a plurality of negative electrode sheets 52 stacked in stacking direction H. The sheets are stacked such that separator 51 is disposed between positive electrode sheet 50 and negative electrode sheet 52.

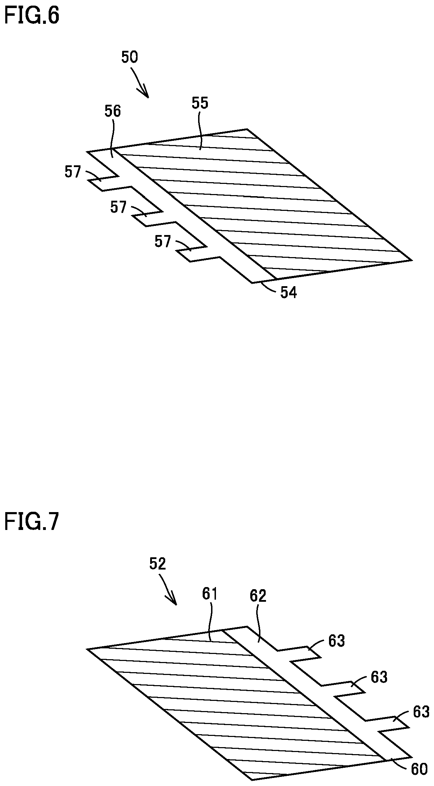

Fig. 6 is a perspective view schematically showing positive electrode sheet 50. Positive electrode sheet 50 includes an aluminum foil 54 and a positive electrode composite material layer 55 formed on the front and back surfaces of aluminum foil 54.

Aluminum foil 54 is formed in a rectangle. A portion of aluminum foil 54 on the side of one longer side is free of positive electrode composite material layer 55 and hence has an exposed portion 56.

Aluminum foil 54 includes a connecting piece 57 formed at exposed portion 56. A plurality of connecting pieces 57 are formed such that they are spaced in a direction in which aluminum foil 54 extends.

Fig. 7 is a plan view schematically showing negative electrode sheet 52. Negative electrode sheet 52 includes a copper foil 60 and a negative electrode composite material layer 61 formed on the front and back surfaces of copper foil 60. Copper foil 60 is formed in a rectangle, and has one side free of negative electrode composite material layer 61 and hence has an exposed portion 62. Negative electrode sheet 52 includes a connecting piece 63 formed at exposed portion 62. Connecting pieces 63 are formed such that they are spaced in a direction in which copper foil 60 extends.

Referring back to Fig. 5, positive electrode collector plate 37 is provided on the side of lateral surface 42 of electrode assembly 35, and negative electrode collector plate 38 is provided on the side of lateral surface 43 of electrode assembly 35.

Herein, in longitudinal direction L, positive electrode collector plate 37 is formed to extend from one end side of lateral surface 42 to the other end side of lateral surface 42. Similarly, negative electrode collector plate 38 is formed to extend from one end side of lateral surface 43 to the other end side of lateral surface 43. Thus, positive and negative electrode collector plates 37 and 38 are formed to be elongate in longitudinal direction L.

Positive electrode collector plate 37 is formed in a flat plate and includes a major surface 46 and a major surface 47. Major surface 46 is an upper surface, and major surface 47 is a lower surface. Connecting piece 57 formed at each positive electrode sheet 50 is welded to major surface 46.

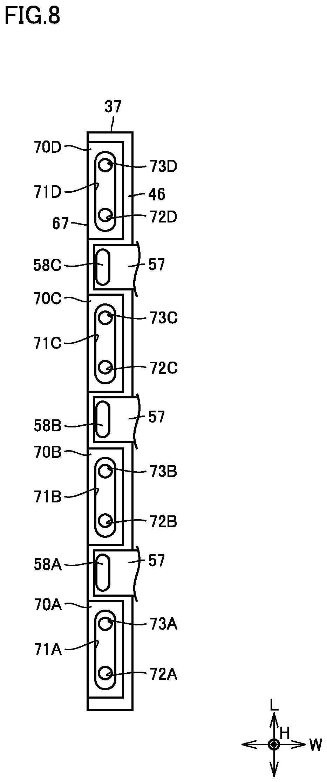

Fig. 8 is a plan view of major surface 46 of positive electrode collector plate 37 and a configuration surrounding the major surface.

A plurality of adhesive materials 70A, 70B, 70C and 70D are formed on major surface 46 of positive electrode collector plate 37 such that they are each spaced in longitudinal direction L.

Adhesive materials 70A, 70B, 70C and 70D are substantially identical, and adhesive material 70A will be described.

Adhesive material 70A is formed of thermoplastic resin or the like. A hole 71A is formed through adhesive material 70A, and a portion of major surface 46 is exposed through hole 71A. Through holes 72A and 73A are formed through a portion of positive electrode collector plate 37 that is exposed through hole 71A. Through holes 72A and 73A are spaced in longitudinal direction L. Through holes 72A and 73A are formed to extend from major surface 46 to reach major surface 47.

Adhesive materials 70B, 70C, and 70D also have holes 71B, 71C, and 71D, respectively. Through holes 72B, 73B, 72C, 73C, 72D, 73D are formed through portions of positive electrode collector plate 37 exposed through holes 71B, 71C, 71D.

The plurality of connecting pieces 57 are welded to portions of major surface 46 located between adhesive materials 70A, 70B, 70C and 70D. For example, a plurality of connecting pieces 57 are collectively welded by a welding portion 58A between adhesive material 70A and adhesive material 70B. Between adhesive materials 70B and 70C and between adhesive materials 70C and 70D as well, welding portions 58B and 58C, respectively, each weld a plurality of connecting pieces 57 to major surface 46.

Herein, adhesive materials 70A, 70B, 70C, 70D and welding portions 58A, 58B, 58C are aligned in longitudinal direction L along an outer side 67 of positive electrode collector plate 37.

In other words, welding portion 58A is disposed between adhesive materials 70A and 70B, and welding portions 58B and 58C are also similarly disposed.

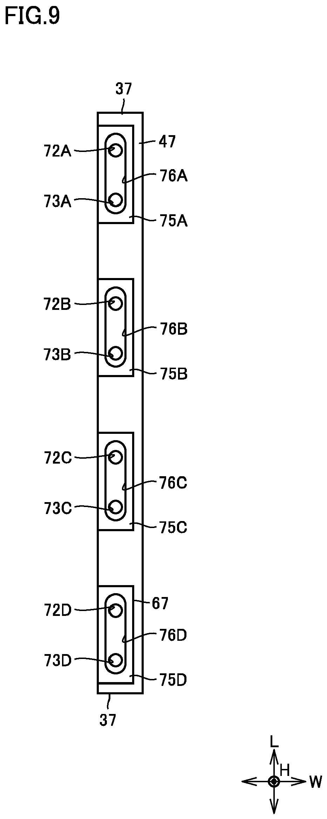

Fig. 9 is a plan view of major surface 47 of positive electrode collector plate 37. Major surface 47 is also provided with a plurality of adhesive materials 75A, 75B, 75C and 75D such that they are spaced in longitudinal direction L.

Adhesive materials 75A, 75B, 75C and 75D have holes 76A, 76B, 76C and 76D, respectively. Each hole 76A, 76B, 76C, 76D exposes a portion of major surface 47. Through holes 72A and 73A are formed through a portion of major surface 47 exposed through hole 76A. Similarly, through holes 72B, 73B, 72C, 73C, 72D, 73D are formed through portions of major surface 47 exposed through holes 76B, 76C, 76D.

Herein, adhesive material 70A shown in Fig. 8 and adhesive material 75A shown in Fig. 9 are formed so as to be opposite to each other with positive electrode collector plate 37 interposed therebetween. That is, adhesive material 75A is disposed under adhesive material 70A. Similarly, adhesive materials 70B, 70C, 70D and adhesive materials 75B, 75C, 75D, respectively, are disposed to be opposite to each other.

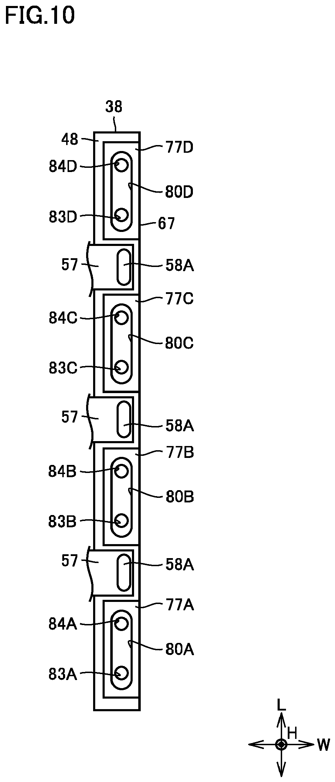

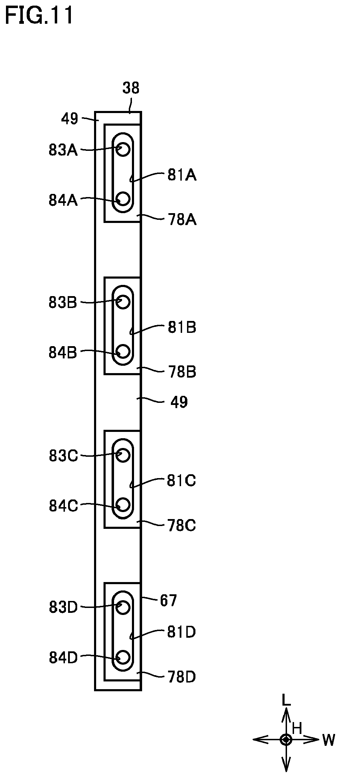

Fig. 10 is a plan view of major surface 48 of negative electrode collector plate 38, and Fig. 11 is a plan view of major surface 49 of negative electrode collector plate 38. As well as positive electrode collector plate 37, negative electrode collector plate 38 is also provided with a plurality of adhesive materials.

A plurality of adhesive materials 77A, 77B, 77C and 77D are formed on major surface 48 such that they are spaced in longitudinal direction L. A plurality of adhesive materials 78A, 78B, 78C and 78D are formed on major surface 49 such that they are spaced in longitudinal direction L. Adhesive material 77A and adhesive material 78A are disposed opposite to each other with negative electrode collector plate 38 interposed therebetween. Similarly, adhesive material 77B and adhesive material 78B are opposite to each other, adhesive material 77C and adhesive material 78C are opposite to each other, and adhesive material 77D and adhesive material 78D are opposite to each other.

Holes 80A, 80B, 80C and 80D are formed through adhesive materials 77A, 77B, 77C and 77D, respectively, and holes 81A, 81B, 81C and 81D are formed through adhesive materials 78A, 78B, 78C and 78D, respectively.

A plurality of through holes 83A, 84A, 83B, 84B, 83C, 84C, 83D and 84D are formed through negative electrode collector plate 38. Through holes 83A and 84B are formed through a portion of negative electrode collector plate 38 exposed through holes 80A and 81A. Similarly, through holes 83B, 84B, 83C, 84C, 83D, 84D are formed through portions exposed through holes 80B, 81B, 80C, 81C, 80D, 81D.

Referring back to Fig. 5, laminate film 36 includes an upper film 39A and a lower film 39B. Upper film 39A is provided so as to cover electrode assembly 35, positive electrode collector plate 37, and negative electrode collector plate 38 from above. Lower film 39B is provided so as to cover electrode assembly 35, positive electrode collector plate 37, and negative electrode collector plate 38 from below. Upper film 39A includes a covering portion 85A and a peripheral portion 86A.

Peripheral portion 86A is formed at a peripheral edge portion of covering portion 85A annularly. Covering portion 85A is formed so as to protrude upward, and is formed so as to cover electrode assembly 35 from above.

Peripheral portion 86A includes a flange 87A, a flange 88A, and connecting pieces 90A and 91A. Flanges 87A and 88A are formed to extend in longitudinal direction L. Connecting piece 90A is formed to interconnect one end of flange 87A and one end of flange 88A. Connecting piece 91A is formed to interconnect the other end of flange 87A to the other end of flange 88A.

Flange 87A is disposed on major surface 46 of positive electrode collector plate 37, and flange 88A is disposed on major surface 48 of negative electrode collector plate 38.

Flange 87A has a plurality of exposure holes 92A, 93A, 94A and 95A such that they are spaced in longitudinal direction L. Flange 87A is disposed such that exposure holes 92A, 93A, 94A and 95A are positioned at adhesive materials 70A, 70B, 70C and 70D, respectively. Adhesive materials 70A, 70B, 70C and 70D adhere flange 87A to positive electrode collector plate 37. Exposure holes 92A, 93A, 94A and 95A each externally expose a portion of major surface 46 of positive electrode collector plate 37.

Flange 88A also has a plurality of exposure holes 96A, 97A, 98A and 99A such that they are spaced in longitudinal direction L. Flange 88A is disposed such that exposure holes 96A, 97A, 98A and 99A are positioned at adhesive materials 77A, 77B, 77C and 77D, respectively. Adhesive materials 77A, 77B, 77C and 77D adhere flange 88A to negative electrode collector plate 38.

Lower film 39B is configured to be similar to upper film 39A. Lower film 39B includes a flange 87B, a flange 88B, and connecting pieces 90B and 91B. Flange 87B is disposed on major surface 47 of positive electrode collector plate 37, and flange 88B is disposed on major surface 49 of negative electrode collector plate 38.

Flange 87B has a plurality of exposure holes 92B, 93B, 94B and 95B such that they are spaced in longitudinal direction L. Flange 87B is disposed such that exposure holes 92B, 93B, 94B and 95B are positioned at adhesive materials 75A, 75B, 75C and 75D, respectively. Adhesive materials 75A, 75B, 75C and 75D adhere flange 87B to positive electrode collector plate 37.

Flange 88B has a plurality of exposure holes 96B, 97B, 98B and 99B such that they are spaced in longitudinal direction L. Flange 88B is disposed such that exposure holes 96B, 97B, 98B and 99B are positioned at adhesive materials 78A, 78B, 78C and 78D, respectively. Adhesive materials 78A, 78B, 78C and 78D adhere flange 88B to negative electrode collector plate 38.

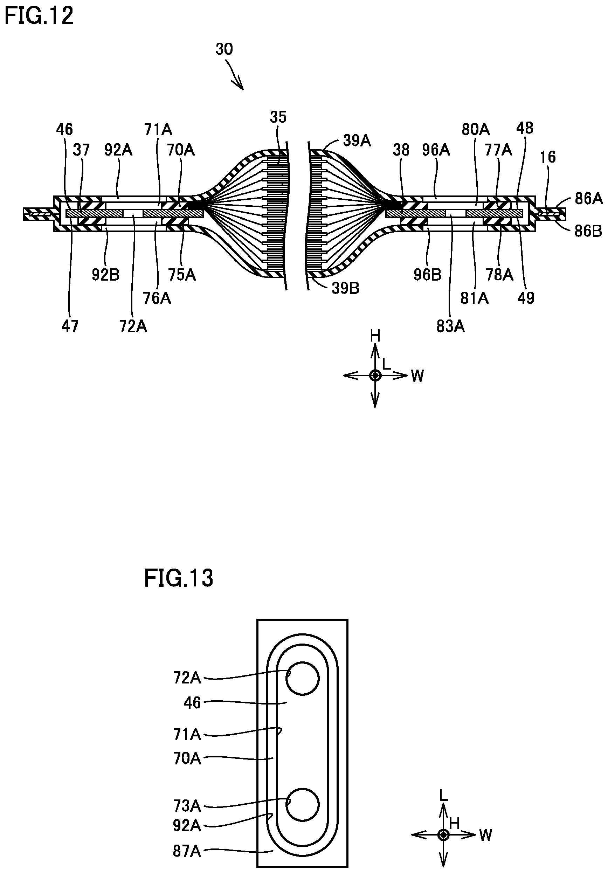

Fig. 12 is a cross-sectional view of power storage cell 30. In Fig. 12, peripheral portions 86A and 86B have their respective peripheral edge portions located outside electrode assembly 35, positive electrode collector plate 37, and negative electrode collector plate 38.

The peripheral edge portion of the lower surface of peripheral portion 86A and the peripheral edge portion of the upper surface of peripheral portion 86B are adhered to each other at a fusing portion 16. Fusing portion 16 is formed to extend annularly. Thus, electrode assembly 35, positive electrode collector plate 37, negative electrode collector plate 38, and the electrolyte (not shown) are sealed inside laminate film 36.

Thus, positive and negative electrode collector plates 37 and 38 are not formed so as to project between upper and lower films 39A and 39B. Therefore, a gap is not formed between laminate film 36 and positive and negative electrode collector plates 37 and 38 on the side of a lateral surface of positive electrode collector plate 37. This can suppress external leakage of the electrolyte provided inside power storage cell 30, intrusion of foreign matters into power storage cell 30, and the like.

In Fig. 12, a portion of major surface 46 of positive electrode collector plate 37 is exposed through exposure hole 92A and hole 71A. A portion of major surface 47 is exposed through exposure hole 92B and hole 71B. Negative electrode collector plate 38 also has major surfaces 48 and 49 partially exposed from laminate film 36.

Fig. 13 is a plan view of exposure hole 96A and hole 71A. Hole 71A of adhesive material 70A extends along exposure hole 92A of flange 87A, and adhesive material 70A is formed along exposure hole 92A. Exposure hole 96A has an opening area larger than that of hole 71A. When viewed at a position away from stacking direction H, hole 71A is located in exposure hole 96A. As a result, intrusion of foreign matters into laminate film 36 is suppressed.

Although power storage cell 30 has been described above, power storage cells 31 and 32 are also configured to be similar to power storage cell 30.

In Figs. 2 and 3, power storage cell 31 includes an electrode assembly 135, a laminate film 136, a positive electrode collector plate 137, and a negative electrode collector plate 138. In power storage cell 31 as well, positive electrode collector plate 137 includes a pair of major surfaces, and a portion exposed from laminate film 136 is formed on each major surface. Similarly, a portion exposed from laminate film 136 is formed on each major surface of negative electrode collector plate 138.

Power storage cell 32 includes an electrode assembly 235, a laminate film 236, a positive electrode collector plate 237, and a negative electrode collector plate 238.

A portion exposed from laminate film 236 is formed on each major surface of positive electrode collector plate 237. A portion exposed from laminate film 236 is formed on each major surface of negative electrode collector plate 238.

On the side of lateral surface 42 of electrode assembly 35, positive electrode collector plate 37, negative electrode collector plate 138, and positive electrode collector plate 237 are aligned in stacking direction H. On the side of lateral surface 43, negative electrode collector plate 38, positive electrode collector plate 137, and negative electrode collector plate 238 are aligned in stacking direction H.

Bus bar 21 is welded to a portion of negative electrode collector plate 38 exposed from laminate film 36. Bus bar 22 is welded to a portion of positive electrode collector plate 237 exposed from laminate film 236. Bus bar 21 is connected to the negative electrode's external terminal 4, and bus bar 22 is connected to positive electrode's external terminal 3.

Connecting member 33 is formed to extend in longitudinal direction L. Connecting member 33 is disposed between positive and negative electrode collector plates 37 and 138, and interconnects positive and negative electrode collector plates 37 and 138.

Connecting member 33 is welded to a portion of positive electrode collector plate 37 exposed from laminate film 36, and connecting member 33 is welded to a portion of negative electrode collector plate 138 exposed from laminate film 136.

Connecting member 34 is disposed between positive and negative electrode collector plates 137 and 238, and interconnects positive and negative electrode collector plates 137 and 238. Connecting member 34 is welded to a portion of positive electrode collector plate 137 exposed from laminate film 136.

Thus, power storage cells 30, 31 and 32 are electrically connected in series by connecting members 33 and 34.

Potting material 25 is introduced to reach power storage module 20 from lateral wall 12. Potting material 25 is formed to contact connecting member 33 and also cover positive electrode collector plate 37, negative electrode collector plate 138, and positive electrode collector plate 237.

Therefore, when power storage device 1 is charged/discharged and power storage module 20 thus generates heat, the heat of power storage module 20 can be radiated to cooling device 5 through connecting member 33, positive electrode collector plate 37, negative electrode collector plate 138, positive electrode collector plate 237, and potting material 25.

Potting material 26 is introduced to reach power storage module 20 from lateral wall 13. Potting material 26 is formed to contact connecting member 34 and also cover negative electrode collector plate 38, positive electrode collector plate 137, and negative electrode collector plate 238. This allows power storage module 20 to radiate heat to cooling device 6 satisfactorily.

Expansion absorbing materials 23 and 24 include a dilatancy material and a sealing member that seals the dilatancy material. Expansion absorbing material 23 is disposed between power storage module 20 and top plate 10, and expansion absorbing material 24 is disposed between power storage module 20 and bottom plate 11.

When power storage device 1 is charged/discharged, power storage module 20 deforms so as to bulge in stacking direction H. Since power storage module 20 deforms at a small rate, expansion absorbing materials 23 and 24 deform so as to permit deformation of power storage module 20.

Thus, even when power storage module 20 deforms so as to bulge, application of a load to accommodation case 2, and hence deformation of accommodation case 2 can be suppressed.

When battery pack 100 is mounted in a vehicle or the like, and the vehicle travels or the like, power storage device 1 is vibrated. When power storage device 1 vibrates, for example, power storage device 1 may vibrate so that the center of power storage device 1 serves as an antinode.

A deformation rate when power storage device 1 vibrates is faster than a rate at which power storage module 20 deforms as power storage device 1 is charged/di scharged.

For such a fast deformation rate, expansion absorbing materials 23 and 24 including the dilatancy material are increased in rigidity and thus resistant to deformation. This can suppress vibration of power storage device 1.

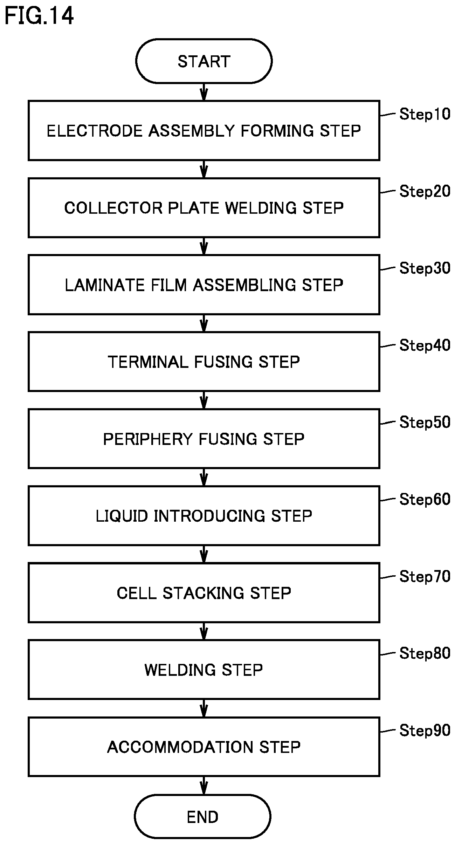

A method for manufacturing power storage device 1 configured as described above will now be described. Fig. 14 is a flowchart of a process for manufacturing power storage device 1. The process for manufacturing power storage device 1 comprises an electrode assembly forming step (step 10), a collector plate welding step (step 20), a laminate film assembling step (step 30), a terminal fusing step (step 40), a periphery fusing step (step 50), a liquid introducing step (step 60), a cell stacking step (step 70), a welding step (step 80), and an accommodation step (step 90).

In the electrode assembly forming step (Step 10), a plurality of positive electrode sheets 50, a plurality of separators 51, and a plurality of negative electrode sheets 52 are deposited in layers. In doing so, positive electrode sheet 50 and negative electrode sheet 52 are disposed with separator 51 interposed therebetween. Note that separator 51 is disposed on the upper and lower surfaces of electrode assembly 35.

The collector plate welding step (Step 20) includes the step of welding positive electrode collector plate 37 and the step of welding negative electrode collector plate 38.

The step of welding positive electrode collector plate 37 includes the step of preparing positive electrode collector plate 37, an adhesive material forming step, and a connecting piece welding step.

In the adhesive material forming step, adhesive materials 70A, 70B, 70C and 70D are formed on major surface 46 of positive electrode collector plate 37, and adhesive materials 75A, 75B, 75C and 75D are formed on major surface 47. The step of welding negative electrode collector plate 38 is similar to the step of welding positive electrode collector plate 37.

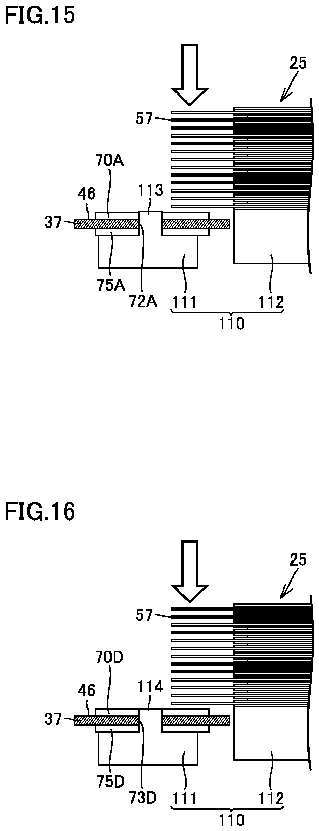

Figs. 15 and 16 are diagrams schematically showing the connecting piece welding step. This step includes the step of disposing positive electrode collector plate 37 and electrode assembly 35 in a welding apparatus 110, and a welding step.

Welding apparatus 110 includes a table 111 on which positive electrode collector plate 37 is disposed, and a table 112 on which electrode assembly 35 is disposed.

Table 111 has pins 113 and 114. Pin 113 is inserted into through hole 72A of positive electrode collector plate 37, and pin 114 is inserted into through hole 73D.

Of the plurality of through holes 72A to 73D, through hole 72A and through hole 73D are farthest from each other. Therefore, by inserting pins 113 and 114 into through holes 72A and 73D, positive electrode collector plate 37 can be accurately positioned. Electrode assembly 35 is disposed on table 112. Electrode assembly 35 has the plurality of connecting pieces 57 disposed on major surface 46 and welded to major surface 46. Thus, positive electrode collector plate 37 is welded to electrode assembly 35. Negative electrode collector plate 38 is also welded to electrode assembly 35 through a similar process.

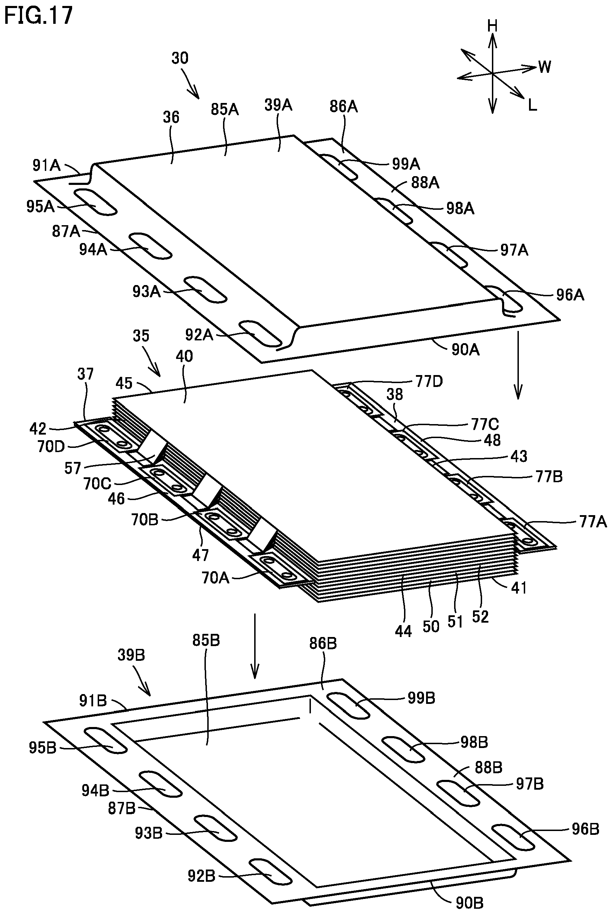

Fig. 17 is a schematic diagram schematically showing the laminate film assembling step (Step 30). In this assembling step, electrode assembly 35 or the like is disposed on lower film 39B, and upper film 39A is disposed on the upper surface of electrode assembly 35.

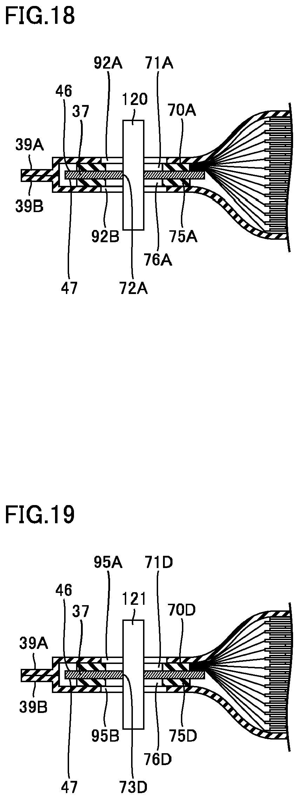

Figs. 18 and 19 are cross-sectional views schematically showing the terminal fusing step (Step 40). The terminal fusing step includes the step of fusing positive electrode collector plate 37 and the step of fusing negative electrode collector plate 38. The step of fusing positive electrode collector plate 37 includes a positioning step and a heating step.

In the positioning step, pin 120 is inserted into through hole 72A, holes 71A and 76A, and exposure holes 92A and 92B, and pin 121 is inserted into through hole 73D, holes 71D and 76D, and exposure holes 95A and 95B.

Thus, positive electrode collector plate 37, upper film 39A, and lower film 39B are positioned.

In the heating step, with pins 120 and 121 inserted, adhesive materials 70A to 70D are heated on the side of the outer surface of upper film 39A, and adhesive materials 75A to 75D are heated on the side of the outer surface of lower film 39B. Thus, upper and lower films 39A and 39B are adhered to positive electrode collector plate 37. The step of fusing negative electrode collector plate 38 includes substantially the same step as the step of fusing positive electrode collector plate 37.

In the periphery fusing step (Step 50), upper and lower films 39A and 39B have their peripheral edge portions heated and thus fused together. This forms laminate film 36. Laminate film 36 accommodates electrode assembly 35, positive electrode collector plate 37, and negative electrode collector plate 38.

In the liquid introducing step (Step 60), electrolyte is introduced through a liquid introduction port formed through laminate film 36, and thereafter, the liquid introduction port is closed. Thus, power storage cells 30, 31, and 32 are formed.

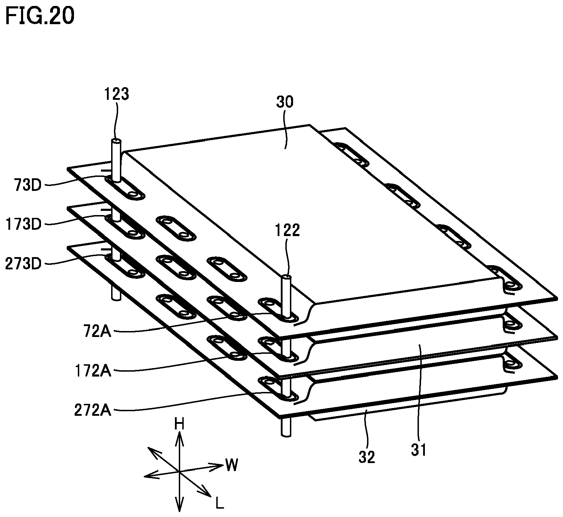

Fig. 20 is a schematic view of the stacking step. The stacking step is the step of sequentially stacking power storage cells 30, 31, and 32. In doing so, pin 122 is inserted into through hole 72A of power storage cell 30. Power storage cells 31 and 32 are configured to be similar to power storage cell 30. Power storage cell 31 has through holes 172A and 173D formed to be adjacent to through holes 72A and 73D in stacking direction H. Power storage cell 32 has through holes 272A and 273D formed to be adjacent to through holes 172A and 173D in stacking direction H.

Pin 122 is inserted into through holes 72A, 172A and 272A, and pin 123 is inserted into through holes 73D, 173D and 273D.

Thus, using pins 122 and 123, power storage cells 30, 31, and 32 are positioned with respect to one another and thus stacked in layers. There is a long distance between through holes 72A, 172A, 272A and through holes 73D, 173D, 273D, and power storage cells 30, 31, and 32 can be positioned satisfactorily.

In the welding step (step 80), bus bar 21, bus bar 22, connecting member 33, and connecting member 34 are welded to the stack of power storage cells 30, 31 and 32 positioned with respect to one another. Thus, power storage module 20 can be configured.

In the accommodation step (Step 90), power storage module 20 is accommodated in accommodation case 2, and potting materials 25 and 26 are introduced into accommodation case 2. Power storage device 1 can thus be manufactured.

While an embodiment of the present disclosure has been described, it should be understood that the embodiment disclosed herein has been described for the purpose of illustration only and in a non-restrictive manner in any respect. The scope of the present disclosure is defined by the terms of the claims, and is intended to include any modifications within the meaning and scope equivalent to the terms of the claims.

## Claims

1. A power storage cell comprising:
an electrode assembly (35) that is composed of a first electrode sheet (50), a separator (51), and a second electrode sheet (52) stacked in layers;
a collector plate (37) that is disposed adjacent to the electrode assembly (35) and has the first electrode sheet (50) connected thereto; and
a laminate film (36) that seals the electrode assembly (35) and the collector plate (37) inside, wherein
a portion of the laminate film (36) that is located on a major surface of the collector plate (37) has at least one exposure hole (92A) that exposes a portion of the collector plate (37).

2. The power storage cell according to claim 1, wherein the major surface of the collector plate (37) is provided with an adhesive material (70A) that is disposed along an opening of the exposure hole (92A) and adheres the collector plate (37) and the laminate film (36) together.

3. The power storage cell according to claim 1 or 2, wherein
the laminate film (36) includes a first film (39A) and a second film (39B), and the first film is disposed so as to cover the electrode assembly (35) and the collector plate (37) on one side, and
the first film (39A) and the second film (39B) have their respective peripheral portions entirely fused together.

4. A power storage device comprising a power storage module comprising power storage cells, each according to any one of claims 1 to 3, stacked in layers.

5. A method for manufacturing a power storage device comprising:
preparing a plurality of power storage cells; and
stacking the plurality of power storage cells in a stacking direction, wherein
the plurality of power storage cells each include an electrode assembly (35), a collector plate (37) connected to the electrode assembly (35), and a laminate film (36) that seals the electrode assembly (35) and the collector plate (37),
the laminate film (36) has a first exposure hole (92A) and a second exposure hole (92B) that each expose a portion of a major surface of the collector plate (37),
a first through hole is formed through the portion of the collector plate (37) exposed through the first exposure hole (92A),
a second through hole is formed through the portion of the collector plate (37) exposed through the second exposure hole (92B), and
in the step of stacking the plurality of power storage cells in layers, power storage cells adjacent in the stacking direction are positioned using the first and second through holes formed through the power storage cells adjacent in the stacking direction.
